# NEW EUROPEAN PATENT SPECIFICATION

(11) **EP 2 405 077 B2**
(45) Date of publication and mention of the opposition decision: **11.11.2020**
(45) Mention of the grant of the patent: 29.11.2017
(21) Application number: 11183058.4
(22) Date of filing: 10.01.2006
(51) Int. Cl.: E04F 15/04, E04F 15/02

(54) **Flooring system comprising mechanically joinable floor panels**
Fussbodensystem umfassend mehrere mechanisch verbindbaren Fussbodenpaneele
Système de plancher comprenant des panneaux de plancher connectables mécaniquement

(30) Priority: 30.03.2005 US 92748
(43) Date of publication of application: 11.01.2012
(62) Divisional of application: 06700664.3
(73) Proprietor: Välinge Innovation AB, 263 65 Viken (SE)
(72) Inventor: Pervan, Darko, 263 61 VIKEN (SE)
(74) Representative: Grünecker Patent- und Rechtsanwälte PartG mbB

(56) References cited:
- EP-A2- 1 420 125
- EP-B1- 1 704 291
- WO-A1-01/66877
- WO-A1-03/016654
- WO-A1-2005/054599
- US-A1- 2004 031 227
- US-A1- 2004 211 143
- US-B1- 6 647 690

## Description

### Technical field

The invention generally relates to the field of mechanical locking systems for floor panels and building panels especially floor panels with mechanical locking systems, which are possible to lock and unlock with a horizontal displacement.

### Field of Application of the Invention

The present invention is particularly suitable for use in floating floors, which are formed of floor panels which are joined mechanically with a locking system integrated with the floor panel, i.e. mounted at the factory, are made up of one or more upper layers of veneer, decorative laminate or decorative plastic material, an intermediate core of wood fibre based material or plastic material and preferably a lower balancing layer on the rear side of the core. The following description of prior art technique, problems of known systems and objects and features of the invention will therefore, as a non restrictive example, be aimed above all at this field of application and in particular laminate flooring formed as rectangular floor panels with long and shorts sides intended to be mechanically joined on both long and short sides.

It should be emphasised that the invention can be applied to any floor panel and it could be combined with all types of known locking system, where the floor panels are intended to be joined using a mechanical locking system connecting the panels in the horizontal and vertical directions on at least two adjacent sides. The invention can thus also be applicable to, for instance, solid wooden floors, parquet floors with a core of wood or wood fibre based material and a surface of wood or wood veneer and the like, floors with a printed and preferably also varnished surface, floors with a surface layer of plastic or cork, linoleum, rubber or similar. Even floors with hard surfaces such as stone, tile and similar are included and floorings with soft wear layer, for instance needle felt glued to a board. The invention can also be used for joining building panels which preferably contain a board material for instance wall panels, ceilings, furniture components and similar.

### Background of the Invention

Laminate flooring usually comprising a core of a 6-12 mm fibreboard, a 0.2-0.8 mm thick upper decorative surface layer of laminate and a 0.1-0.6 mm thick lower balancing layer of laminate, plastic, paper or like material. A laminate surface comprising a melamine impregnated paper. The most common core material is a fibreboard with high density and good stability usually called HDF - High Density Fibreboard. Sometimes also MDF - Medium Density Fibreboard - is used as core.

Traditional laminate floor panels of this type have been joined by means of glued tongue and groove joints.

In addition to such traditional floors, floor panels have been developed which do not require the use of glue and instead are joined mechanically by means of so called mechanical locking systems. These systems comprise locking means, which lock the panels horizontally and vertically. The mechanical locking systems are usually formed by machining of the core of the panel. Alternatively, parts of the locking system can be formed of a separate material, for instance aluminium or HDF, which is integrated with the floor panel, i.e. joined with the floor panel in connection with the manufacture thereof.

The main advantages of floating floors with mechanical locking systems are that they are easy to install. They can also easily be taken up again and used once more at a different location.

### Definition of Some Terms

In the following text, the visible surface of the installed floor panel is called **"front side",** while the opposite side of the floor panel, facing the sub floor, is called **"rear side".** The edge between the front and rear side is called **"joint edge".** By **"horizontal plane** or **principal plane"** is meant a plane, which extends parallel to the outer part of the surface layer. Immediately juxtaposed upper parts of two adjacent joint edges of two joined floor panels together define a **"vertical plane (V)"** perpendicular to the horizontal plane. By **"horizontally"** is meant parallel to the horizontal plane and by **"vertically"** parallel to the vertical plane

By **"locking systems"** are meant co acting connecting means, which connect the floor panels vertically and/or horizontally. By **"mechanical locking system"** is meant that joining can take place without glue. Mechanical locking systems can in many cases also be joined by gluing. By **"integrated with"** means formed in one piece with the panel or factory connected to the panel. By **"snapping resistance"** is meant the force in N which is required to lock two 100 mm edges of two panels by a horizontal displacement. By " **locking strength"** is meant the force in N which is required to completely unlock or to at least separate more than 0,2 mm two 100 mm edges of two locked panels. By **"the strength snapping ratio (SSR)"** is meant the locking strength divided with snapping resistance.

### Prior Art Technique and Problems thereof

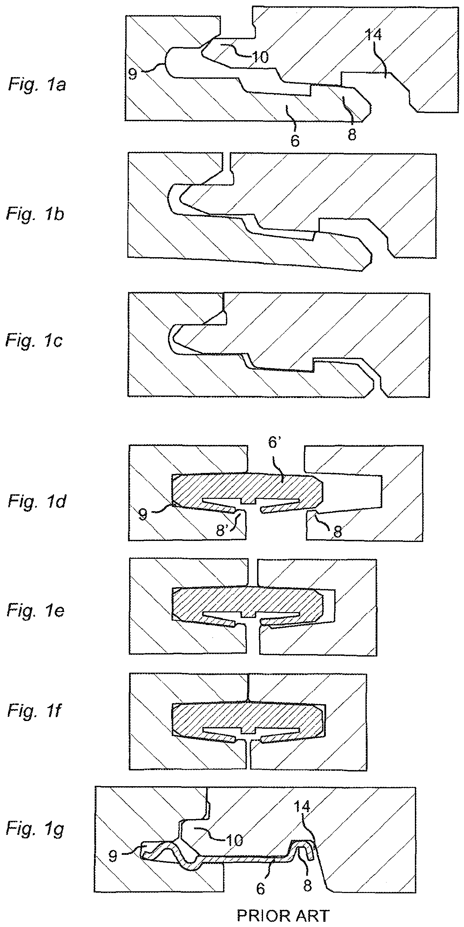

For mechanical joining of long sides as well as short sides in the vertical and horizontal direction (direction D1, D2) several methods and locking systems could be used. One of the most used methods is the angle-snap method and one of the most used locking systems is a system made in one piece with the core. The long sides are installed by angling. The panel is than displaced in locked position along the long side. The shorts sides are locked by horizontal snapping as shown in figures 1a-1c. The vertical connection is a tongue 10 and a groove 9 During the horizontal displacement, a strip 6 with a locking element 8 is bended and when the edges are in contact, the strip springs back and a locking element 8 enters a locking groove 14 and locks the panels horizontally. The vertical displacement of the locking element during the snapping action is caused by the bending of the strip. Such a snap connection is complicated since a hammer and a tapping block must be used to overcome the friction between the long edges and to bend the strip during the snapping action. The friction on the long side could be reduced and the panels could be displaced without tools. The snapping resistance is however considerable especially in locking systems made in one piece with a wood based core. Wood based materials are generally difficult to bend. Cracks in the panel may occur during snapping and the locking element must be rather small in vertical direction in order to allow snapping. The locking strength of such small locking elements made in one piece with the core material, is generally rather low and the panels may slide apart especially in dry conditions.

It is known that a snap system could have a separate plastic strip 6', integrated with the panel and with a resilient part as shown in figures 1d-1f. Such a locking system could be locked with less resistance than the traditional one-piece snap system. This locking system has however several disadvantages. The plastic strip is used to replace both the tongue and the strip with a locking element. The material cost is therefore high and the locking system is generally not compatible with the locking system used in old panels. The groove 9 is difficult to produce since it must have a locking element 8'. In fact 4 locking elements, two flexible locking elements on the strip and two (8,8') in the panel, must be used to lock in the horizontal direction. It is difficult to fix the plastic strip over the whole length of the short side. This means that corner portions will not have any tongue and this could cause problems in some applications. US2004/031227 A1 discloses a flooring system in accordance with the features of the preamble of claim 1. It is also known that a snap system could have a separate strip 6 made of an aluminium sheet as shown in figure 1g. Such a locking system is very easy to install with angling. The main disadvantage is that the material cost is high especially when the locking system should be possible to lock with snapping. The reason is that the strip must be rather wide to allow bending and snapping.

### Brief Description of the Invention and Objects thereof

A first overall objective in the art is to provide a mechanical locking system, which could be locked by horizontal snapping and with less snapping resistance than the known prior art systems and with preferably considerable higher locking strength. The costs and functions should be favourable compared to known technology. An essential part of the overall objective is to improve the function and costs of those parts of the mechanical locking system that locks in the horizontal direction when panels are pushed against each other.

More specifically the object is to provide a mechanical snap locking system where one or several of the following advantages are obtained.

The floor panel should preferably be possible to displace and lock with such a low force that in the most favourable embodiments no tools will be needed or in the case when tools such as a tapping block and a hammer are used, the required tapping force should be so low that damage of the edges in normal installations is excluded. The locking function should be reliable and the vertical and horizontal locking should be strong and prevent that two locked panels will move when humidity is changing or when people walk on a floor.

The locking system should be able to lock floor panels vertically with high precision so that the surfaces are essentially in the same plane.

The locking system should be designed in such a way that the material and production costs could be low.

A second objective is to provide a mechanical snap locking system, which could be compatible with traditional mechanical locking systems made in one piece with the core. It is an advantage if a new panel could be locked to an old panel. In such a case a new locking system could be introduced on the market with no extra costs for the old stock of floor panels.

The above objects of the invention are achieved wholly or partly by a mechanical locking systems and floor panels, according to the independent claim. Embodiments of the invention are evident from the dependent claims and from the description and drawings.

According to a first aspect a flooring system is provided, comprising a plurality of floor panels, which are mechanically connectable to each other along one pair of adjacent edges. The floor panels are provided with tongue and groove formed in one piece with the panels for mechanically locking together said one pair of adjacent edges at right angles to the principal plane of the panels, thereby forming a vertical mechanical connections between the panels. The panels are provided with a first locking element at one first edge formed in one piece with the panel and a locking groove at an opposite adjacent second edge, the locking groove being open towards a rear side or a front side of the panel. Each panel is provided with a second locking element, formed of a separate material and connected to the locking groove. The first and second locking elements form a mechanical connection locking the panels to each other horizontally parallel to the principal plane and at right angles to the joint edges. The second locking element is flexible and resilient such that two panels, can be mechanically joined by displacement of said two panels horizontally towards each other, while at least a part of the second locking element at said second edges is resiliently displaced vertically, until said adjacent edges of the two panels are brought into engagement with each other horizontally and the second locking element at said second edge is displaced towards its initial position against the first locking element at the first edge.

Although it is an advantage to integrate the flexible locking element with the panel, the invention does not exclude an embodiment in which flexible locking elements are delivered as separate components to be connected to the panel by the installer prior to installation.

The invention allows horizontal and vertical locking of all sides of floor panels with for instance an angling of the long sides, a simple horizontal displacement along the long sides and snapping of the short sides. In this preferred embodiment the flexible locking element is on the short sides. It could be on the long side or on the long and short sides.

The invention is especially suited for use in floor panels, which are difficult to snap for example because they have a core, which is not flexible or strong enough to form a strong snap locking system. The invention is also suitable for wide floor panels, for example with a width larger than 20 cm, where the high snapping resistance is a major disadvantage during installation and in panels which are difficult to displace in locked position along the joint. Panels where parts of the locking system is made of a material with high friction, such as wood, and panels with locking systems which are produced with tight fit or without play or even with pretension, are difficult to displace especially along the long sides. Especially panels with such pretension where the locking strip is bent in locked position and presses the panels together are very difficult to displace and snap. A locking system that reduces the snapping resistance will decrease the installation time of such panels considerably.

According to a second aspect a flooring system is provided, comprising a plurality of floor panels, which are mechanically connectable to each other along one pair of adjacent edges. The floor panels are provided with tongue and groove formed in one piece with the panels for mechanically locking together said one pair of adjacent edges at right angles to the principal plane of the panels, thereby forming a vertical mechanical connections between the panels.

The panels are provided with a first locking element at one first edge formed in one piece with the panel and a second locking element, formed of a separate material connected to the panel.

The first and second locking elements form a mechanical connection locking the panels to each other horizontally parallel to the principal plane and at right angles to the joint edges.

Two panels, can be mechanically joined by displacement of said two panels horizontally towards each other, while the first locking element and the second locking element are displaced first vertically away from each other and than vertically towards each other.

The second locking element is made of a sheet shaped material which has a higher density than the material of the first locking element, for example aluminium, and which has a first and a second surface and an edge portion between the surfaces. The edge portion forms at least a part of a second locking surface, which is in contact with a first locking surface of the first locking element and prevents horizontal separation of the panels.

The edge portion of the sheet shaped material is used to form a hard and sharp locking surface, which creates a strong locking force against the first locking surface. Such sharp locking elements make it possible to accomplish a high locking strength even with very small locking surfaces. The core and consequently the first locking element which is made in one piece with the panel will in most laminate and wood floorings be rather soft and the sharp edge of the aluminium sheet will cut into the wood fibres like a knife and prevent separation of the edges.

A combination of a sharp and a soft locking element gives the advantage that small locking surfaces could be used and these small locking surfaces require only a small vertical displacement of about some tenths of a millimetres to accomplish a horizontal snapping. This means that the bending and the snapping resistance could be reduced considerably with maintained or improved locking strength. The snapping resistance could be reduced further if a part of the aluminium sheet surface, which has a low friction compared to wood fibre materials, is used as a sliding surface during the snapping action.

Most one-piece snap systems on the market have a high snapping resistance in relation to the locking strength. A test sample of a panel with 100 mm edge has generally a snapping resistance of 200 to 300 N and a locking strength of 200 to 600 N. The locking strength divided with snapping resistance - the strength snapping ratio (SSR) - varies from 200/200=1 to 600/300 = 2.

The invention makes it possible to reduce the snapping resistance to for example 100 or even lower and to increase the locking strength to for example 1000 or even more. A SSR of 5 - 10 could easily be reached with the first and the second aspects of the invention.

According to a third aspect a method to disconnect floor panels with a horizontal movement opposite to the snapping action is provided. The method comprises the steps of a) inserting a tool in a mechanical locking system having two locking elements which locks mechanically two adjacent edges of two panels in a horizontal direction, b) separating vertically the two locking elements with the tool, c) displacing the edges horizontally away from each other to unlock the mechanical locking system.

Mechanical snap locking systems are generally unlocked by angling or displacement along the edge. There is however installation patterns that do not allow such an unlocking for example a herring bone pattern. It is known that panels could be unlocked with a horizontal displacement perpendicular to the edge. Such unlocking could only be made with snap systems, which have a very low locking strength.

### Brief Description of the Drawings

Figs 1a-g illustrate prior art.
Figs 2a-b illustrate two examples of the first aspect.
Figs 3a-c illustrate in several steps mechanical joining of floor panels according to the first aspect.
Figs 4a-d illustrate in several steps mechanical locking and unlocking of floor panels according to the first and the third aspect.
Figs 5a-c illustrate in several steps mechanical locking of floor panels according to another embodiment.
Figs 6a-e illustrate embodiments
Figs 7a-h illustrate different embodiments of a flexible locking element.
Figs 8a-8c illustrate locking systems on long and short side
Figs 9a-i illustrate how prior art locking systems could be converted to a locking system.
Figs 10a-d illustrate how the flexible locking element could be used as a flexible tongue enabling vertical connection.
Fig. 10b illustrates an embodiment of the invention.
Figs 11a-c illustrate in several steps mechanical locking according to an embodiment of the second aspect of the
Figs 12a-j illustrate embodiments

### Description of Embodiments of the Invention

To facilitate understanding, several locking systems in the figures are shown schematically. It should be emphasised that improved or different functions can be achieved using combinations of the preferred embodiments. The inventor has tested all known and especially all commercially used locking systems on the market in all type of floor panels, especially laminate and wood floorings and the conclusion is that at least all these known locking systems which have one or more locking elements cooperating with locking grooves could be adjusted to a system with one ore more flexible or sharp locking elements according to the first and second aspects. Most of them could easily be adjusted in such a way that they will be compatible with the present systems. Several flexible and/or sharp locking elements could be located in both adjacent edges, one over the other or side-by-side. The locking elements according to the invention could be on long and/or short sides and one side with a flexible or sharp locking element could be combined with an other side which could have all known locking systems, preferably locking systems which could be locked by angling or a vertical movement. The invention does not exclude floor panels with flexible locking elements on for example a long and a short side. Such panels could be installed by the known snap - snap installation methods. The most preferable embodiment is however a floorboard with a surface layer of laminate, a core of HDF and a locking system with a flexible or sharp locking element on the short side allowing easy snapping combined with a one piece mechanical locking system on long side which could be locked by angling. The long side locking system could have a small play of some 0,01 mm between at least some surfaces, which are active in the vertical or horizontal locking such as tongue/groove and or locking element/locking groove. This small play facilitates displacement. Such a floorboard will be very easy to install with angling and snapping.

The sliding resistance on long and/or short sides could be reduced with wax or other chemicals. Mechanical grinding or polishing of the machined wood fibres could also be used to reduce friction in connection with for example angling, sliding and snapping.

Angles, dimensions, rounded parts etc are only examples and could be adjusted within the principles of the invention.

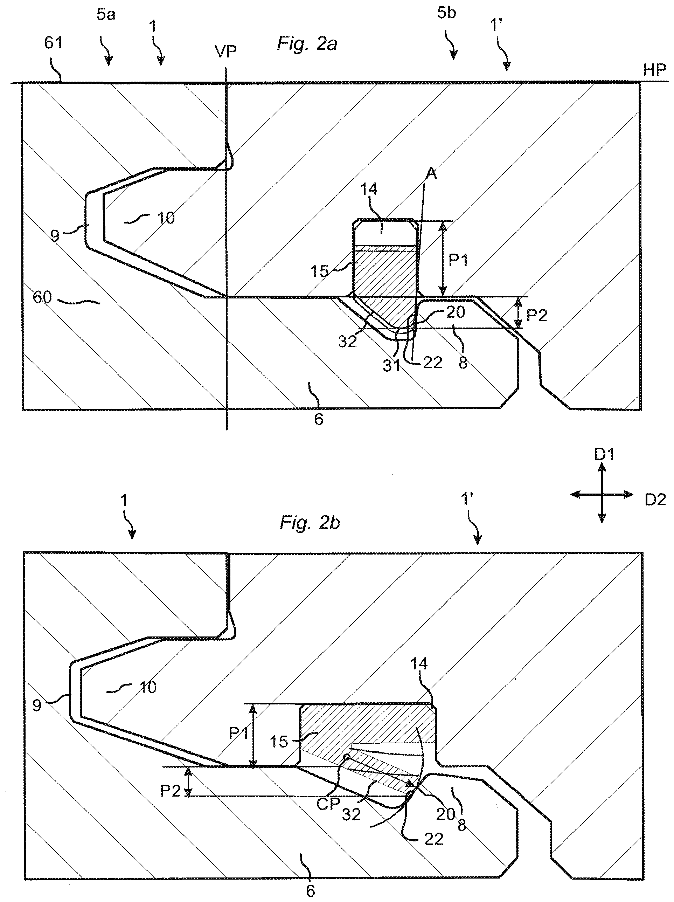

A first preferred embodiment of a floor panel 1, 1' provided with a mechanical locking system according to the invention is now described with reference to Figs 2a-b.

Fig. 2a illustrates schematically a cross section of a joint preferably between a short side joint edge 5a of a panel 1 and an opposite short side joint edge 5b of a second panel 1'.

The front sides 61 of the panels are essentially positioned in a common horizontal plane HP, and the upper parts of the joint edges 5a, 5b abut against each other in a vertical plane VP. The mechanical locking system provides locking of the panels relative to each other in the vertical direction D1 as well as the horizontal direction D2.

To provide joining of the two joint edges in the D1 and D2 directions, the edges of the floor panel in a manner known per se a locking strip 6 with a first locking element 8, and a groove 9 made in one piece with the panel in one joint edge 5a, hereafter referred to as the groove side, and a tongue 10 made in one piece with the panel at an opposite edge 5b, hereafter referred as the tongue side. The tongue 10 and the groove 9 and provide the vertical locking D1.

The mechanical locking system comprises a separate flexible second locking element 15 connected into a locking groove 14 formed in the opposite edge 5b of the panel. The locking groove 14 is in the embodiment shown in figure 2a formed on the tongue side. Parts of the flexible locking element could bend in the length direction and could be displaced in the locking groove. The flexible locking element 15 has a groove portion P1 that is located in the locking groove 14 and a projecting portion P2 projecting outside the locking groove 14. The projecting portion P2 of the second flexible locking element 15, made of an separate material, in one of the joint edges cooperates with a first locking element 8, made in one piece with the panel and formed in the other joint edge.

In this embodiment, the panel 1 could for example have a body or core 60 of wood fibre based material such as HDF, plywood or solid wood. The panels 1, 1' could also be made of stone, metal or ceramic materials or similar rigid materials. These materials are not flexible and a one-piece snap system could no be used.

The flexible second locking element could be combined with a tongue 10 and/or a strip 6 with a locking element 8 which could be made of a separate material connected to the panel.

The flexible locking element 15 has a protruding part P2 with a rounded outer part 31 and a sliding surface 32 that in this embodiment is formed like a bevel.

The first locking element 8 has a first locking surface 20 which cooperates with the second locking surface 22 of the second flexible locking element 15 and locks the joint edges 5a, 5b in a horizontal direction D2. In this embodiment the locking surfaces 20, 22 are slightly angled (A) against the vertical plane VP. The second locking element 15 will therefore lock as a wedge and tolerances cold be eliminated with vertical pretension caused by the vertical flexibility of the second flexible locking element.

Figure 2b shows another embodiment. The inner part P1 of the flexible locking element 15 is fixed in the locking groove 14 and the protruding part P2 could flex vertically towards the locking groove 14 and the inner part P1 and back again towards the first locking element. In this embodiment the bending of the protruding part P2 takes place around a centre point CP. The locking surfaces 20, 22 are formed such that they meet each other when the protruding part P2 snaps back towards its initial position.

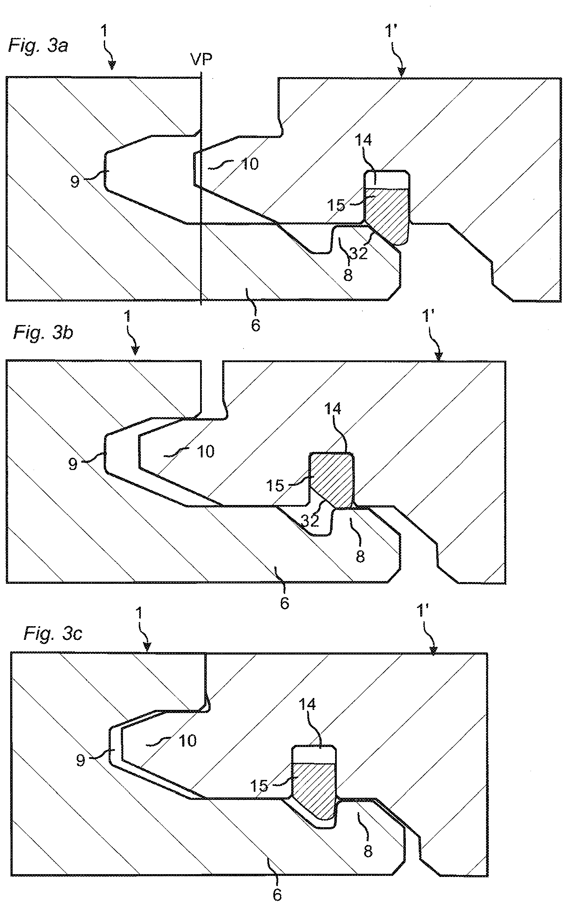

Figures 3a - 3c show how the flexible locking element 15 is displaced in the locking groove 14. The flexible locking element 15 is displaced vertically when the displacement surface 32 presses against the bevelled part of the first locking element 8 as shown in figure 3a.

When the top edges of the panels 1, 1' are in contact or in the intended locked position, the flexible locking element 14 springs back and locks to the first locking element 8 as shown in figure 3c.

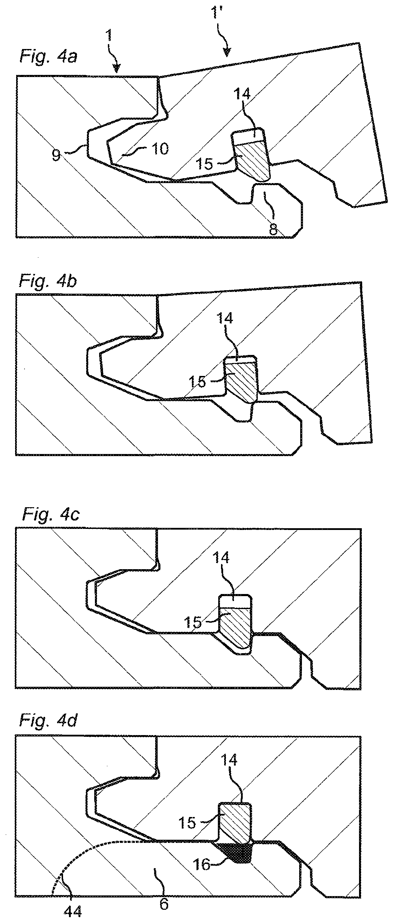

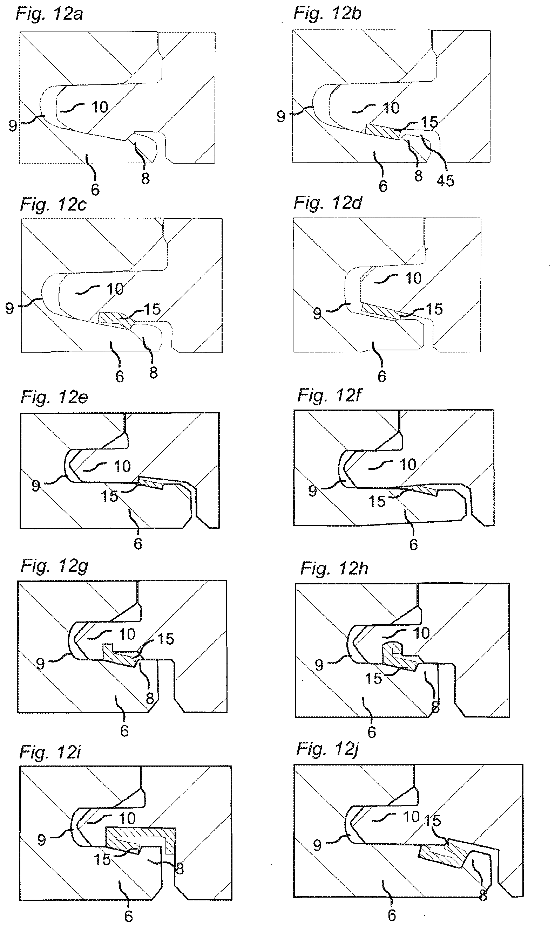

Figures 4a-4c show that a locking system with a flexible locking element 15 could also be locked and unlocked with angling. Figure 4d show that a locking system with a flexible locking element could be unlocked with a needle shaped tool 16, which is inserted along the joint edge to push back the flexible locking element 14 and to unlock the mechanical locking system. Such a tool could also be used to unlock the locking system in figure 12b. In this embodiment the tool could be inserted for example in the space 45 above the locking element 8 to push back the strip 6. Several other methods could be used to push back locking elements in order to unlock horizontally mechanical locking system. A separate groove 44, as shown in figure 4d could for example be made under the strip 6 and under the locking element 15 perpendicular to the edge. Such a grove could be used to release panels installed in patterns, which do not allow a tool to be inserted along the edge. Such an unlocking could be used to unlock panels which are installed in a herringbone pattern long side to short side with angling of short sides and snapping of short sides to long side. It could also be used to disconnect panels with 6 or 8 sides where one or several sides are connected with a snapping system according to the invention.

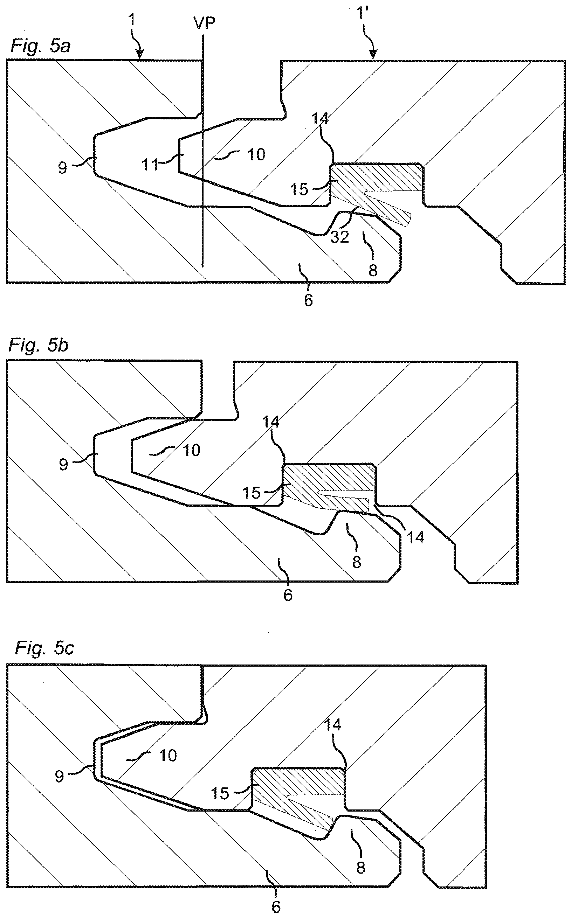

Figures 5a - 5c shows locking according to the embodiment in figure 2b. It is an advantage if the tip 11 of the tongue 10 is partly in the groove 9 when the sliding surface 32 is in contact with the locking element 8. This facilitates snapping and installation of the panels.

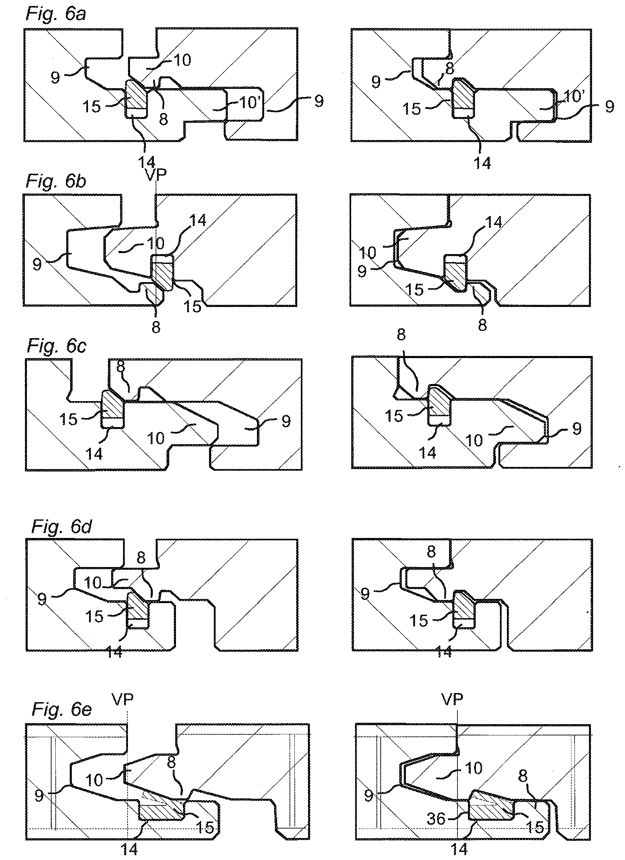

Figures 6a - 6e show different embodiments Figure 6a show a system with two tongues 10, 10' and with a locking groove 14 open towards the front side. Figure 6b shows a system with the locking groove on the tongue side partly in the part of the tongue 10, which is outside the vertical plane VP. Figure 6c and 6d are similar to 6a but these systems have only one tongue.

Figure 6e shows an embodiment according to figure 2b but with the locking groove 14 open towards the front side. In this embodiment the floor panel is a parquet floor with a surface layer of wood and a lamella core. The flexible locking element 14 has a protrusion 36 to increase the friction between and to facilitate a mechanical connection between the flexible locking element 15 and the locking groove 14.

The flexible locking element 15 should preferably be connected to the locking groove with high precision, especially when parts of the flexible locking element 15 are displaced in the locking groove 14 during locking. Depending on the compressibility and friction between the flexible locking element and the locking groove, the flexible locking element as whole or different parts could be connected with a small play, for example 0,01-0,10 mm, a precise fit or a pre tension. Wax or other friction reducing materials or chemicals could be applied in the locking groove and/or between the locking elements.

Even with a play, a precise fit between the upper joint edges could be accomplished. The protruding part P2 could be formed to press against the locking surface 20 of the locking element 8. For example the protruding part P2 could be formed with a small angle to the vertical plane VP. The protruding part P2 of the flexible tongue will tilt and press the edges together. The flexible locking element 15 could be formed to cause a permanent pressure force vertically in the locked position. This means that the flexible locking element 15 will only partly spring back to the initial position. The flexible locking element could optionally be designed with such dimensions that after locking it will move slightly towards its initial position. Gradually a perfect connection will be accomplished.

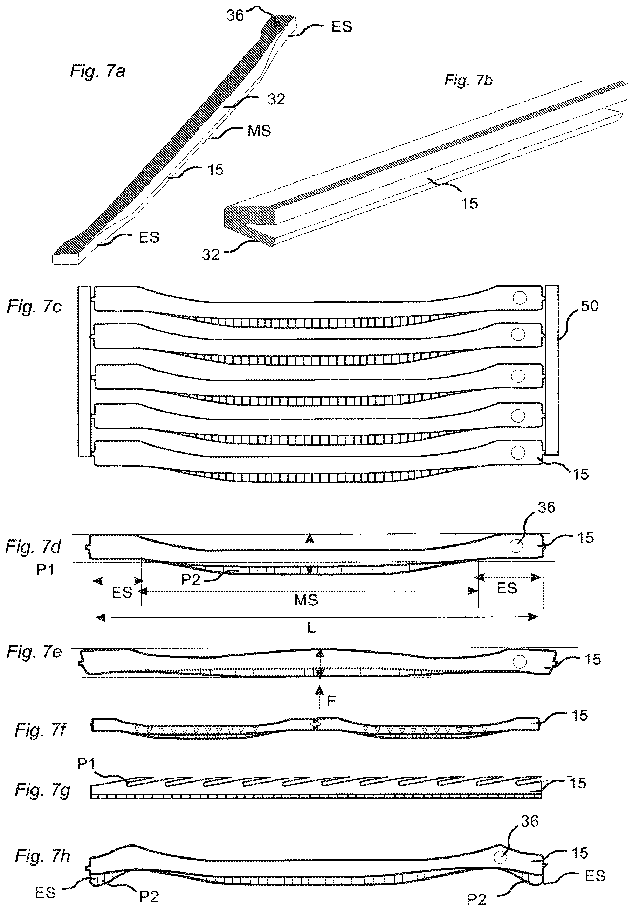

Figures 7a-7h shows different embodiments of the flexible locking element 15. In figure 7a the flexible locking element 15 is moulded and has on one of the edge sections ES a friction connection 36 which could be shaped for instance as a local small protrusion. This friction connection keeps the flexible locking element in the locking groove 14 during installation, or during production, packaging and transport, if the flexible locking element is integrated with the floor panel at the factory. In figure 7b the flexible locking element 15 is an extruded plastic section.

Figure 7c shows a blank 50 consisting of several flexible locking elements 15 connected to each other. In this embodiment the flexible locking element 15 is made with moulding, preferably injection moulding.

Any type of polymer materials could be used to produce the flexible locking elements such as PA (nylon), POM, PC, PP, PET or PE or similar having the properties described above in the different embodiments. These plastic materials could be reinforced with for instance glass fibre. A preferred material is glass fibre reinforced PA.

Figures 7d and 7e show a flexible locking element 15 with a length L, middle section MS and edge sections ES. This flexible locking element could bend in the length direction and the protruding part P2 could be displaced vertically in the locking groove if a force F is applied to the protruding part P2. Figure 7e shows a double tongue 15. Figure 7g shows an extruded section with a resilient punched inner part P1. Figure 7h shows a flexible tongue 15 with protruding parts P2 at the edge sections ES.

With these production methods and basic principles a wide variety of complex two and three-dimensional shapes could be produced at low cost. Of course the flexible locking element 15 could be made from metal, preferably aluminium, but wood based sheet material such as HDF and compact laminate could also be used to form flexible locking elements with machining and punching and in combination with for example flexible rubber materials or similar.

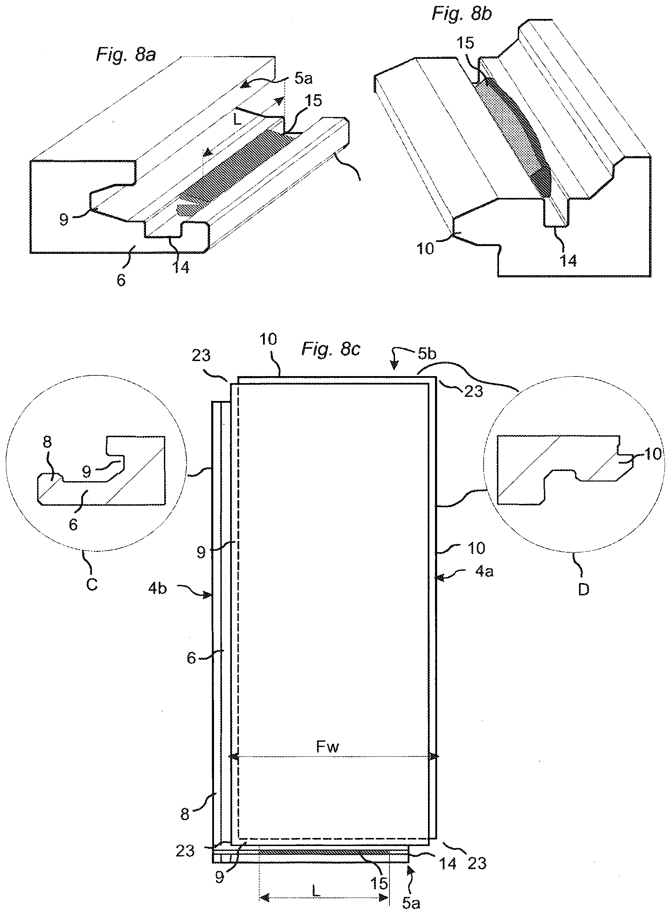

Figures 8a-8c show how the flexible locking element 15 is connected to a groove 14 at a short side 5a of a floor panel. Figure 8a shows an embodiment with a flexible tongue as shown in figure 7b and figure 8b shows an embodiment according to figure 7a. Figure 8c shows a floor panel with a flexible locking element on the short sides 5a, 5b and an angling system C, D on the long sides 4a, 4b. Of course the long sides can also have one or several flexible locking elements. The flexible locking element 15 has in this embodiment a length L that is smaller than the width FL of the floor panel. As a non-restricting example it could be mentioned that sufficient locking strength could be achieved with a flexible locking element with a length L, which is smaller than 0.8 times the floor width FW. Even a length L of 0,5 times FW could be sufficient. Such a flexible locking element could have a weight of about 1 gram and the material cost could be considerably lower than for other known technologies where separate materials are used. It is also very easy to connect to the locking element since it is not very important that the flexible locking element is connected at a precise distance from the corner portions 23. A further advantage is that the tongue 10 extends along essentially the whole short side as in traditional floor panels. This gives a strong vertical connection especially at the corner portions 23. Of course the flexible locking element could cover essentially the whole width FL.

The flexible locking element could be connected to the locking groove in several ways. A preferable method is that the flexible locking element is mechanically fixed. Of course glue or mechanical devices can also be used. To simplify the understanding the panel is located with its rear side up and the flexible locking element is on the short side. The panel could also be turned with the front side up. The flexible locking element is separated from blanks 50, if it is moulded, or from rolls if is extruded. It is then pressed or rolled into the locking groove 14 when a short side of the panel is displaced under a fixing unite and the locking element 15 is connected with friction. A lot of alternatives are possible within the main principles that the flexible locking element is separated and fixed with a friction force.

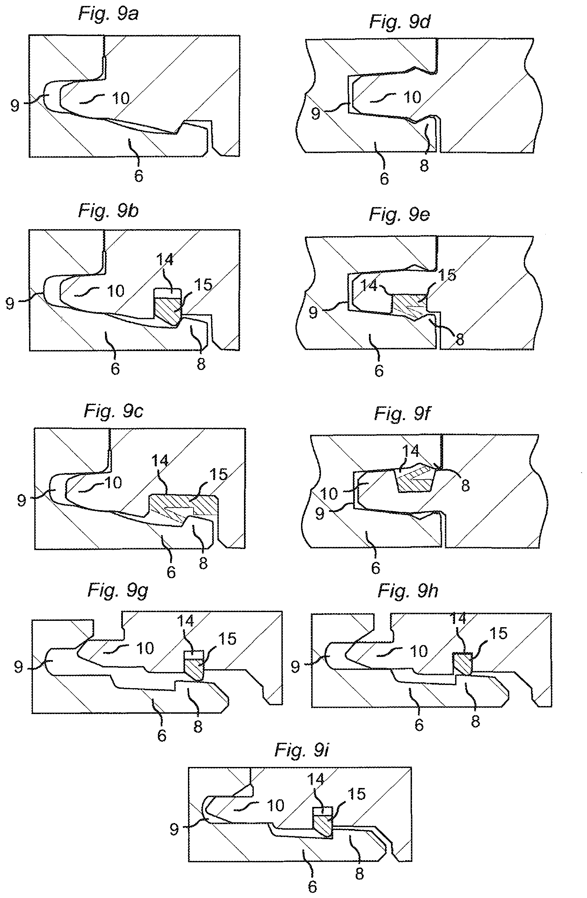

Figures 9a to 9i are examples which show that all known locking systems, especially traditional snap systems with a bendable strip (9a-9c or 9g-9i) or lip 6 (9d-9f) could be adjusted to a snap system with a flexible locking element 14 according to the invention. Generally only a simple adjustment of the locking groove is necessary as shown in figures 9a and 9b. Such an adjustment could be made in the same machine and with the same number of cutting tools.

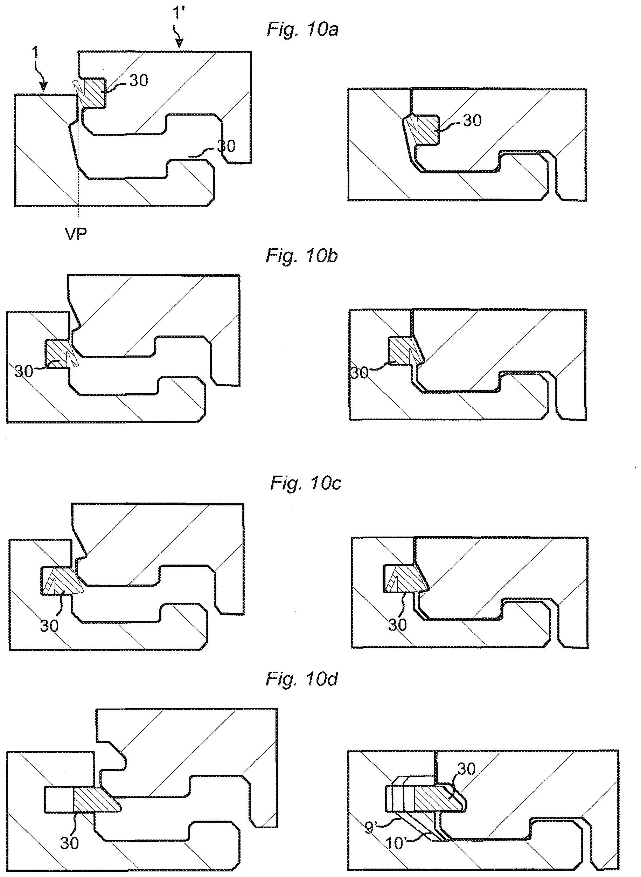

Figures 10a - 10d show that the principles used in a locking system with a flexible locking element could also be used to replace the tongue 10 with a flexible tongue 30 in order to provide a locking system, which could be locked by vertical folding. One panel 1' could be moved along the vertical plane VP vertically towards another panel 1. The flexible tongue 30 is in this case displaced horizontally according to the same principles as described for the flexible locking element and all embodiments of the flexible locking element could be used. Of course the flexible locking element could be combined with a flexible tongue. Such a locking system could be locked with angling, snapping and vertical folding. Figure 10d show that it is an advantage if the flexible tongue 30 on a short side is position between the upper and lower parts of the tongue 10' and groove 9' on the long sides. This gives a stronger locking at the corner portions.

Within the invention a lot of alternatives are possible to accomplish snapping with a flexible locking element. Al features of the embodiment described above could be combined with each other or used separately. They could be used on long and/or short sides. The method to produce a separate locking element 15, for example as described in the embodiments above, which is inserted into a groove 14, could of course be used to improve friction properties and strength even if the locking element is not flexible or displaceable in the vertical direction. A non-flexible second locking element 15 as in figure 3a, which is not displaceable in the locking groove and which could be made of for example a plastic material, could for example be used according to the second principle of the invention described below.

The methods and principle could also be used together with a flexible tongue 10 that could be bent in horizontal direction during locking. The flexible locking element could also be combined with a strip 6 or lip, which is partly bent during snapping. The degree of such a bending could be considerable smaller than in present known systems.

The system could be used to connect tile shaped panes installed on a wall. The tiles could be connected to each other and to a locking member fixed to the wall.

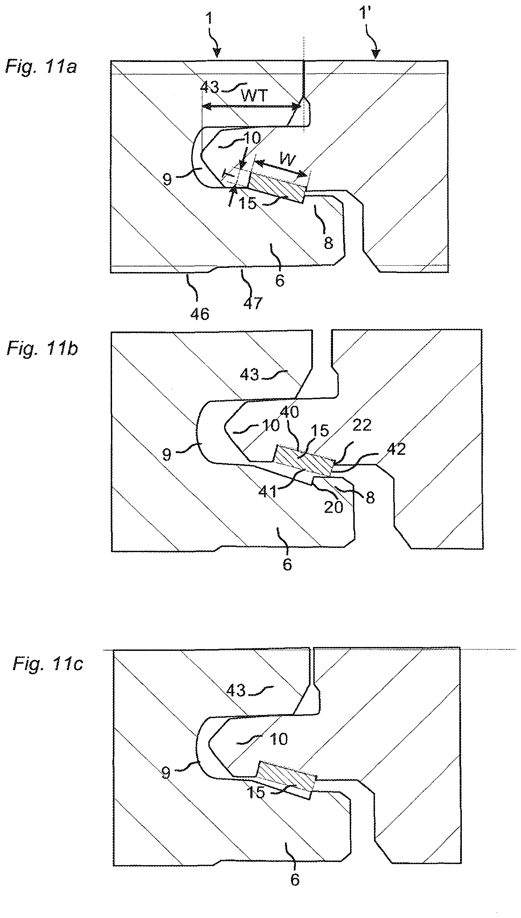

Figures 11a-c show a mechanical snap locking system. The locking system has a first locking element 8 made in one piece with the panel and having a first locking surface 20 and a second locking element 15 made of a separate material, which in this embodiment is an aluminium sheet, with a first surface 40, a second surface 41 and an edge portion 42 which edge portion is a second locking surface. The first softer locking surface 20 cooperates with the harder and sharper second locking surface 42 and prevents horizontal separation of the panels 1, 1. The second locking element 15 is in this embodiment on the tongue side and is connected to the lower side of the tongue 10 with glue but it could also be mechanically connected.

As a non-restrictive example it could be mentioned that the thickness T of the aluminium sheet could be less than 1 mm preferably 0,3-0,6 mm and the width W less than 5 mm. Preferably the width W should be smaller than the width WT of the tongue 10 for example 1-3 mm. The overlapping locking surfaces could be less than 1 mm. Preferably they could be as small as for example 0,2 - 0,4 mm. This means that the bending of the upper lip 43 and the strip 6 could be as small as 0,1-0,2 mm or less. Such a small bending during snapping will create a low snapping resistance in wood based materials.

The balancing layer 46 at the outer part 47 of the locking strip 6 could be removed in order to avoid humidity related bending of the strip 6 which in some floor panels could cause problems especially in locking systems with small locking elements.

Figures 12a-b show how a one piece snap locking system with a high snapping resistance and low locking strength could be converted to a compatible locking snap locking system according to the second principle of the invention.

Figures 12c-12f show embodiments where the second locking element 15 is connected with glue. Figure 12d and 12f also shows that the first locking element could be extremely small or nonexistent. The sharp second locking surface will create a cut like a knife-edge against a wood material. The advantage of these embodiments is that there is no need to position the locking elements accurately since the second locking element 15 will always lock when the upper edges are in tight contact with each other.

The locking strength could be increased considerably if there is a vertical pre tension in locked position between the locking elements caused by the strip 6 and/or the upper lip 43.

Figures 12g-j show embodiments where the second locking element is mechanically connected to the panel. They also show that the first and the second principles could be combined. The second locking element 15 could be both flexible and sharp and an extremely strong snap lock could be accomplished with a low snapping resistance. All embodiments could be used in locking systems that could be locked by angling and/or snapping or vertical folding.

In principle all materials, which are stronger or have different friction properties than the core materials of a floor panel could be used as locking elements of separate material in order to reduce snapping resistance and/or to increase the locking strength in mechanical locking systems. Wood based materials could also be impregnated with chemicals and similar advantage could be reached.

Further embodiments is summarized in the following numbered paragraphs:
1. A flooring system, comprising a plurality of floor panels (1,1') which are mechanically connectable to each other along one pair of adjacent edges, said floor panels being provided with tongue (10) and groove (9) formed in one piece with the panels for mechanically locking together said adjacent edges at right angles to the principal plane of the panels, thereby forming a vertical mechanical connections (D1) between the panels, said panels being provided with a first locking element (8) at one first edge formed in one piece with the panel and a locking groove (14) at an opposite second edge, the locking groove being open towards a rear side or a front side of the panel, wherein
   each panel being provided with a second locking element (15), formed of a separate material and connected to the locking groove (14),
   the first and second locking element form a mechanical connections locking the panels to each other horizontally (D2) parallel to the principal plane and at right angles to the joint edges,
   the second locking element (15) is flexible and resilient such that two panels, can be mechanically joined by displacement of said two panels horizontally towards each other, while at least a part of the second locking element at said second edge is resiliently displaced vertically, until said adjacent edges of the two panels are brought into engagement with each other horizontally and the second locking element at said second edge is displaced towards its initial position against the first locking element at the first edge.
2. A flooring system as in paragraph 1, wherein the locking groove (14) is open towards the rear side.
3. A flooring system as in paragraph 1, wherein the locking groove (14) is open towards the front side.
4. A flooring system as in paragraph 2, wherein the first locking element is on a locking strip (6) which is an extension of the lower part of the groove (9) and which locking strip (6) extends beyond a vertical plane (V).
5. A flooring system as in any one of paragraphs 1-4, wherein the second locking element (15) has a groove portion (P1) located in the locking groove (14) and a projecting portion (P2) located outside the locking groove which are displaced towards each other when the panels are displaced horizontally.
6. A flooring system as in any one of paragraphs 1-5, wherein the displacement of the second locking element (15) is not effected until a part of the tongue (10) is in the groove (9).
7. A flooring system as in paragraph 6, wherein a part of the second locking element (15) is displaced in the locking groove (14).
8. A flooring system as in any one of paragraphs 1-7, wherein the second locking element along its length (L) has at least two sections (MS, ES) and that the displacement of one of the sections is larger than the displacement of the other one of the sections.
9. A flooring system as in paragraph 8, wherein said second locking element (15) has a projecting portion (P2) which in connected state is located outside the locking groove (14) and a groove portion (P1) in the locking groove such that the size of said projecting portion and/or the groove portion varies along the length of the flexible locking element.
10. A flooring system as in paragraph 1, wherein the flexible locking element is spaced from a corner portion (23).
11. A flooring system as in any one of paragraphs 1 - 10, wherein the second locking element (15) is made of polymer material.
12. A flooring system as in paragraph 11, wherein the second locking element (15) is made of a moulded or extruded polymer material reinforced with glass fibre.
13. A flooring system as in any one of paragraphs 11 -12, wherein the polymer material is a thermoplastic material.
14. A flooring system as in paragraph 1, wherein the second locking element (15) has a sliding surface (32) at the protruding part (P2) and that a tip (11) of the tongue (10) is partly in the groove (9) when the sliding surface on the second locking element is in contact with the first locking element (8).
15. A flooring system, comprising a plurality of floor panels (1, 1') which are mechanically connectable to each other along one pair of adjacent edges, said floor panels comprising a tongue (10) and a groove (9), formed in one piece with the panels for mechanically locking together said one pair of adjacent edges at right angles to the principal plane of the panels, thereby forming a vertical mechanical connections (D1) between the panels and a first locking element (8) at one first edge formed in one piece with the panel and a second locking element (15), formed of a separate material connected to the panel, said first and second locking elements form a mechanical connection locking the panels to each other horizontally parallel to the principal plane and at right angles to the joint edges (D2) whereby said floor panels (1. 1') can be mechanically joined by displacement of said two panels horizontally towards each other, while the first locking element (8) and the second locking element (15) are displaced first vertically away from each other and than vertically towards each other wherein the second locking element (15) is made of a sheet shaped material which has a higher density than the material of the first locking element and which second locking element has a first (40) and a second (41) surface and an edge portion (42) between the first (40) and second (41) surfaces, whereby the edge portion (42) forms at least a part of a second locking surface (22) which is in contact with a first locking surface (20) of the first locking element and prevents horizontal separation of the panels.
16. A flooring system as in paragraph 15, wherein the sheet shaped material is an aluminium sheet.
17. A flooring system as in paragraphs 15 or 16, wherein the second locking element is connected to the panel with glue.
18. A flooring system as in paragraphs 15 or 16, wherein the second locking element is connected to the panel mechanically.
19. A flooring system as in paragraph 17 or 18, wherein the sheet shaped material has a width (W), which is at least two times as large as the thickness (T).
20. A flooring system as in paragraph 19, wherein the sheet shaped material has a width (W), which is smaller than the width (WT) of the tongue (10).
21. A flooring system as in paragraph 15, wherein the bending of the strip 6 during the snapping action is less than 0, 3 mm.
22. A flooring system as in any one of paragraphs 1-21, wherein the locking strength is at least 3 times higher than the snapping resistance.
23. A method to disconnect floor panels with a horizontal movement opposite to the snapping action, wherein said method comprising:
   inserting a tool (16) in a mechanical locking system comprising two locking elements (8, 15) which mechanically locks two adjacent edges of two panels (1, 1') in a horizontal direction (D2),
   separating vertically the two locking elements with the tool and
   displacing the edges horizontally away from each other to unlock the mechanical locking system.

## Claims

1. A flooring system, comprising a plurality of rectangular floor panels (1,1') with long and short edges which are mechanically connectable to each other along one pair of adjacent joint edges, each floor panel being provided with a first groove formed in one piece with the panel at a first joint edge and a flexible tongue (30) connected to a second groove at a second opposite joint edge for mechanically locking together said adjacent joint edges at right angles to the principal plane of the panels, thereby forming a vertical mechanical connections (D1) between the panels, said panels being provided with a locking element (8), formed in one piece with the panel, at said second opposite joint edge and a locking groove (14) at said first joint edge for mechanically locking together said adjacent joint edges (D2) parallel to the principal plane and at right angles to the joint edges, the locking groove being open towards a rear side of the panel and the locking elements protrudes vertically from a locking strip,
**characterised in that** the flexible tongue (30) is formed of a separated material and is flexible and resilient such that two panels, can be mechanically joined by displacement of said two panels vertically towards each other, while at least a part of the flexible tongue (30) at said second opposite joint edge is resiliently displaced horizontally, until said adjacent edges of the two panels are brought into engagement with each other horizontally and the flexible tongue (30) at said second opposite joint edge is then displaced towards its initial position and against a wall of the first groove at the first joint edge, that all parts of the flexible tongue that extend beyond a vertical plane (V) of the joint edges is an outer part of the flexible tongue (30), and that said outer part protrudes downwardly.

2. A flooring system as claimed in claim 1, wherein a lower wall of the second groove is positioned above the locking strip.

3. A flooring system as claimed in claim 1, wherein the second groove is positioned above an upper surface of the locking element.

4. A flooring system as claimed in claim 3, wherein a lower wall of the second groove is positioned above an upper surface of the locking element.

5. A flooring system as claimed in any one of the preceding claims, wherein the second groove is positioned at an upper surface of said second opposite joint edge.

6. A flooring system as claimed in in any one of the preceding claims, wherein the locking strip extends beyond a vertical plane (V) of the joint edges.

7. A flooring system as claimed in any one of the preceding claims, wherein a lower most part of the outer part of the flexible tongue (30) is positioned above a lower wall of the second groove.

8. A flooring system as claimed in in any one of the preceding claims, wherein a part of the flexible tongue (30) is displaced in the second groove.

9. A flooring system as claimed in in any one of the preceding claims, wherein the flexible tongue (30) is connected to the second groove by a friction connection.

10. A flooring system as claimed in in any one of the preceding claims, wherein the flexible tongue (30) is connected to the second groove by glue.

11. A flooring system as claimed in any one of the preceding claims, wherein the flexible tongue (30) has a sliding surface at a protruding part (P2), said sliding surface cooperates with a sliding surface at an edge of the first joint edge.

12. A flooring system as claimed in any one of the preceding claims, wherein the flexible tongue (30) has a groove portion (P1) located in the second groove and a projecting portion (P2) located outside the second groove, said portions are displaced towards each other when the panels are displaced horizontally.

13. A flooring system as claimed in any one of the preceding claims, wherein the flexible tongue (30) has a groove portion (P1) located in the second groove and a projecting portion (P2) located outside the second groove, wherein the groove portion (P1) substantially fills the second groove.

14. A flooring system as claimed in any one of the preceding, wherein the flexible tongue (30) is made of a moulded or extruded polymer material reinforced with glass fibre.

15. A flooring system as claimed in claims 14, wherein the polymer material is a thermoplastic material.

## Patentansprüche

1. Fußbodensystem, das eine Vielzahl rechtwinkliger Fußbodenpaneele (1, 1') mit langen und kurzen Kanten, die miteinander entlang eines Paars von benachbarten Verbindungskanten mechanisch verbindbar sind, umfasst, wobei jedes Fußbodenpaneel versehen ist mit einer ersten Nut, die in einem Stück mit dem Paneel an einer ersten Verbindungskante ausgebildet ist, und einer flexiblen Feder (30), die mit einer zweiten Nut an einer zweiten gegenüber liegenden Verbindungskante verbunden wird, um die benachbarten Verbindungskanten miteinander rechtwinklig zu der Hauptebene der Paneele mechanisch zu verriegeln, wodurch eine vertikale mechanische Verbindung (D1) zwischen den Paneelen gebildet wird, die Paneele versehen sind mit einem Verriegelungselement (8), das in einem Stück mit dem Paneel an der zweiten gegenüber liegenden Verbindungskante gebildet ist, und einer Verriegelungsnut (14) an der ersten Verbindungskante, um die benachbarten Verbindungskanten (D2) miteinander parallel zu der Hauptebene und rechtwinklig zu den Verbindungskanten mechanisch zu verriegeln, wobei die Verriegelungsnut zu einer Rückseite des Paneels hin offen ist und das Verriegelungselement von einem Verriegelungsstreifen vertikal hervorsteht, **dadurch gekennzeichnet dass** die flexible Feder (30) aus einem separaten Material ausgebildet ist und flexibel und federnd nachgiebig ist, so dass zwei Paneele durch vertikale Verschiebung der zwei Paneele zueinander mechanisch zusammengefügt werden können, während zumindest ein Teil der flexiblen Feder (30) an der zweiten gegenüber liegenden Verbindungskante federnd nachgiebig horizontal verschoben wird, bis die benachbarten Kanten der zwei Paneele miteinander horizontal in Eingriff gebracht sind und die flexible Feder (30) an der zweiten gegenüber liegenden Verbindungskante anschließend in ihre Anfangsstellung hin und gegen eine Wand der ersten Nut an der ersten Verbindungskante verschoben ist,
dass alle Teile der flexiblen Feder, die sich über eine vertikale Ebene (V) der Verbindungskanten hinaus erstrecken, ein äußerer Teil der flexiblen Feder (30) ist, und dass der äußere Teil nach unten hervorsteht.

2. Fußbodensystem nach Anspruch 1, wobei eine untere Wand der zweiten Nut über dem Verriegelungsstreifen angeordnet ist.

3. Fußbodensystem nach Anspruch 1, wobei die zweite Nut über einer oberen Fläche des Verriegelungselements angeordnet ist.

4. Fußbodensystem nach Anspruch 3, wobei eine untere Wand der zweiten Nut über einer oberen Fläche des Verriegelungselements angeordnet ist

5. Fußbodensystem nach einem der vorhergehenden Ansprüche, wobei die zweite Nut an einer oberen Fläche der zweiten gegenüberliegenden Verbindungskante angeordnet ist.

6. Fußbodensystem nach einem der vorhergehenden Ansprüche, wobei der Verriegelungsstreifen sich über eine vertikale Ebene (V) der Verbindungskanten hinaus erstreckt.

7. Fußbodensystem nach einem der vorhergehenden Ansprüche, wobei ein unterster Teil des äußeren Teils der flexiblen Feder (30) über einer unteren Wand der zweiten Nut angeordnet ist.

8. Fußbodensystem nach einem der vorhergehenden Ansprüche, wobei ein Teil der flexiblen Feder (30) in die zweite Nut verschoben wird.

9. Fußbodensystem nach einem der vorhergehenden Ansprüche, wobei die flexible Feder (30) mit der zweiten Nut durch eine Reibungsverbindung verbunden wird.

10. Fußbodensystem nach einem der vorhergehenden Ansprüche, wobei die flexible Feder (30) mit der zweiten Nut durch Klebstoff verbunden wird.

11. Fußbodensystem nach einem der vorhergehenden Ansprüche, wobei die flexible Feder (30 eine Gleitfläche an einem hervorstehenden Teil (P2) aufweist und die Gleitfläche mit einer Gleitfläche an einer Kante der ersten Verbindungskante zusammenwirkt.

12. Fußbodensystem nach einem der vorhergehenden Ansprüche, wobei die flexible Feder (30) einen in der zweiten Nut angeordneten Nutabschnitt (P1) und einen außerhalb der zweiten Nut angeordneten, hervorstehenden Abschnitt (P2) aufweist, wobei die Abschnitte zueinander verschoben sind, wenn die Paneele horizontal verschoben werden.

13. Fußbodensystem nach einem der vorhergehenden Ansprüche, wobei die flexible Feder (30) einen in der zweiten Nut angeordneten Nutabschnitt (P1) und einen außerhalb der zweiten Nut hervorstehenden Abschnitt (P2) aufweist, wobei der Nutabschnitt (P1) im Wesentlichen die zweite Nut ausfüllt.

14. Fußbodensystem nach einem der vorhergehenden Ansprüche, wobei die flexible Feder (30) aus einem geformten oder extrudierten, mit Glasfaser verstärkten Polymerwerkstoff hergestellt ist.

15. Fußbodensystem nach Anspruch 14, wobei der Polymerwerkstoff ein thermoplastischer Werkstoff ist.

## Revendications

1. Système de plancher, comprenant une pluralité de panneaux de plancher rectangulaires (1,1') avec des bords courts et longs qui peuvent être raccordés mécaniquement l'un à l'autre le long d'une paire de bords de jonction adjacents, chaque panneau de plancher étant pourvu d'une première rainure formée en un seul tenant avec le panneau au niveau d'un premier bord de jonction et d'une languette flexible (30) connectée à une deuxième rainure au niveau d'un deuxième bord de jonction opposé pour bloquer mécaniquement ensemble lesdits bords de jonction adjacents à angle droit par rapport au plan principal des panneaux, en formant ainsi des connexions mécaniques verticales (D1) entre les panneaux, lesdits panneaux étant pourvus d'un élément de blocage (8), formé d'une seule pièce avec le panneau, au niveau dudit deuxième bord de jonction opposé et d'une rainure de blocage (14) au niveau dudit premier bord de jonction pour bloquer mécaniquement ensemble lesdits bords de jonction adjacents (D2) parallèlement au plan principal et à angle droit par rapport aux bords de jonction, la rainure de blocage étant ouverte vers un côté arrière du panneau et l'élément de blocage fait saillie verticalement à partir d'une bande de blocage,
**caractérisé en ce que** la languette flexible (30) est formée d'un matériau distinct et est flexible et élastique de telle sorte que deux panneaux, peuvent être mécaniquement reliés par déplacement desdits deux panneaux verticalement l'un vers l'autre, alors qu'au moins une partie de la languette flexible (30) au niveau dudit deuxième bord de jonction opposé est élastiquement déplacée horizontalement, jusqu'à ce que lesdits bords adjacents des deux panneaux soient amenés en engagement l'un avec l'autre horizontalement et la languette flexible (30) au niveau dudit deuxième bord de jonction opposé est ensuite déplacée vers sa position initiale et contre une paroi de la première rainure au niveau du premier bord de jonction,
et **en ce que** toutes les parties de la languette flexible qui s'étendent au-delà d'un plan vertical (V) des bords de jonction sont une partie externe de la languette flexible (30), et **en ce que** ladite partie externe fait saillie vers le bas.

2. Système de plancher selon la revendication 1, dans lequel une paroi inférieure de la deuxième rainure est disposée au-dessus de la bande de blocage.

3. Système de plancher selon la revendication 1, dans lequel la deuxième rainure est disposée au-dessus d'une surface supérieure de l'élément de blocage.

4. Système de plancher selon la revendication 3, dans lequel une paroi inférieure de la deuxième rainure est disposée au-dessus d'une surface supérieure de l'élément de blocage.

5. Système de plancher selon l'une quelconque des revendications précédentes, dans lequel la deuxième rainure est disposée au niveau d'une surface supérieure dudit deuxième bord de jonction opposé.

6. Système de plancher selon l'une quelconque des revendications précédentes, dans lequel la bande de blocage s'étend au-delà d'un plan vertical (V) des bords de jonction.

7. Système de plancher selon l'une quelconque des revendications précédentes, dans lequel la partie la plus inférieure de la partie externe de la languette flexible (30) est disposée au-dessus d'une paroi inférieure de la deuxième rainure.

8. Système de plancher selon l'une quelconque des revendications précédentes, dans lequel une partie de la languette flexible (30) est déplacée dans la deuxième rainure.

9. Système de plancher selon l'une quelconque des revendications précédentes, dans lequel la languette flexible (30) est connectée à la deuxième rainure par une connexion de friction.

10. Système de plancher selon l'une quelconque des revendications précédentes, dans lequel la languette flexible (30) est connectée à la deuxième rainure par de la colle.

11. Système de plancher selon l'une quelconque des revendications précédentes, dans lequel la languette flexible (30) présente une surface de glissement au niveau d'une partie saillante (P2), ladite surface de glissement coopère avec une surface de glissement au niveau d'un bord du premier bord de jonction.

12. Système de plancher selon l'une quelconque des revendications précédentes, dans lequel la languette flexible (30) présente une partie de rainure (P1) disposée dans la deuxième rainure et une partie saillante (P2) disposée à l'extérieur de la deuxième rainure, lesdites parties sont déplacées l'une vers l'autre lorsque les panneaux sont déplacés horizontalement.

13. Système de plancher selon l'une quelconque des revendications précédentes, dans lequel la languette flexible (30) présente une partie de rainure (P1) disposée dans la deuxième rainure et une partie saillante (P2) disposée à l'extérieur de la deuxième rainure, dans lequel la partie de rainure (P1) remplit pratiquement la deuxième rainure.

14. Système de plancher selon l'une quelconque des revendications précédentes, dans lequel la languette flexible (30) est fabriquée dans une matière polymère moulée ou extrudée renforcée de fibre de verre.

15. Système de plancher selon la revendication 14, dans lequel la matière polymère est une matière thermoplastique.
